# EUROPÄISCHE PATENTANMELDUNG

(11) **EP 3 181 277 A1**
(43) Veröffentlichungstag der Anmeldung: **21.06.2017**
(21) Anmeldenummer: 15200321.6
(22) Anmeldetag: 16.12.2015
(51) Int. Cl.: B23B 49/00, B23B 51/02, B28D 1/14

(54) **BOHRER UND WENDELVERSCHLUSS**

(71) Anmelder: HILTI Aktiengesellschaft, 9494 Schaan (LI)
(72) Erfinder: Pfeiffer, Eduard, 87642 Halblech (DE); Lindner, Norbert, 86916 Kaufering (DE)
(74) Vertreter: Hilti Aktiengesellschaft Corporate Intellectual Property

(57) **Zusammenfassung**

Der erfindungsgemäße Bohrer 1 hat einen Bohrkopf 2, eine Wendel 3 mit einer Anzahl von Wendelnuten 15 und ein Einsteckende 4. Auf der Wendel 3 ist ein ringförmiger Wendelverschluss 25, welcher ein in die Wendelnuten 15 eingreifendes, mehrgängiges Innengewinde 28 aufweist.

## Beschreibung

### GEBIET DER ERFINDUNG

Die vorliegende Erfindung betrifft einen Wendelverschluss für einen Bohrer und den Bohrer mit dem Wendelverschluss.

EP2886229A1 beschreibt einen Bohrer für den Abbau von mineralischen Baumaterialien, wie Beton. Der Bohrkopf und der Bohrer sind für einen raschen Abbau des mineralischen Gesteins optimiert. Der Bohrkopf kann ferner Armierungseisen zermahlen, welche häufig in Beton eingegossen sind. Allerdings ist der Bohrfortschritt beim Abbau des Armierungseisens um eine Größenordnung geringer als beim Abbau des Betons.

### OFFENBARUNG DER ERFINDUNG

Der erfindungsgemäße Bohrer hat einen Bohrkopf, eine Wendel mit einer Anzahl von Wendelnuten und ein Einsteckende. Auf der Wendel ist ein ringförmiger Wendelverschluss, welcher ein in die Wendelnuten eingreifendes, mehrgängiges Innengewinde aufweist.

Der Wendelverschluss unterbricht die Wendelgänge, wodurch die Wendel Bohrgut nur bis zu dem Wendelverschluss transportiert. Der Wendelverschluss kann an der Öffnung oder dem Rand des Bohrlochs positioniert werden. Das Bohrgut kann nicht mehr aus dem Bohrloch transportiert werden, was sich als vorteilhaft für den Abbau von Armierungseisen mit dem Bohrer erweist.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrer mit Wendelverschluss
- Fig. 2: einen Querschnitt durch den Bohrer
- Fig. 3: den Bohrer beim Bohrern von Stahl-armierten Beton
- Fig. 4: einen Querschnitt durch den Wendelverschluss
- Fig. 5: einen Schnitt durch den Wendelverschluss

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

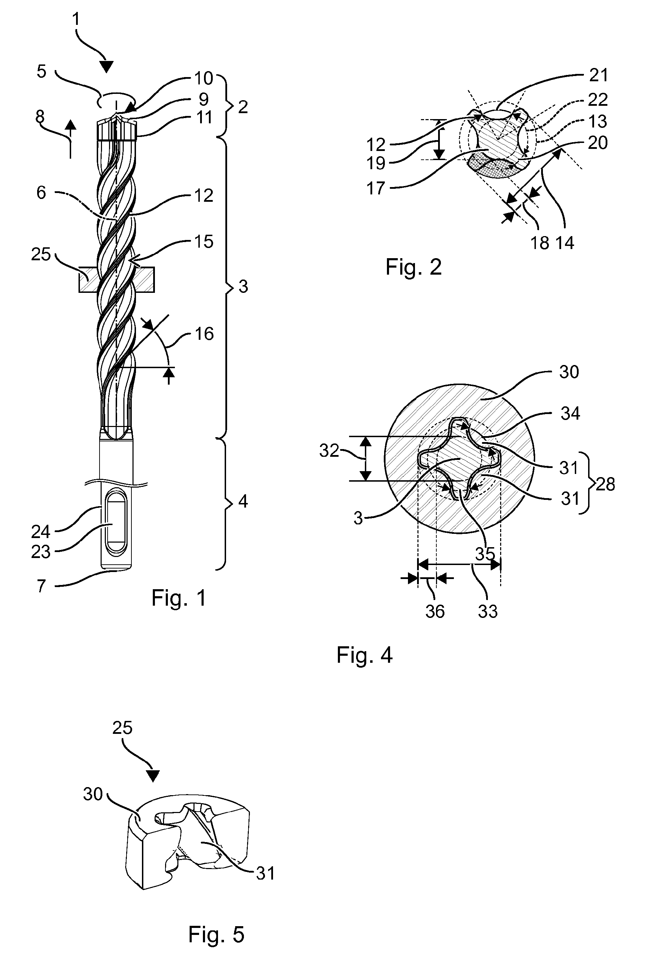

Fig. 1 zeigt einen beispielhaften Bohrer **1.** Der Bohrer **1** hat einen Bohrkopf **2,** eine Wendel **3** und ein Einsteckende **4.** Der Bohrer **1** ist beispielsweise für den Abbau von mineralischen Werkstoffen, z.B. armiertem Beton, ausgelegt. Der Bohrer **1** wird im Betrieb in einem Drehsinn **5** um seine Längsachse **6** (Bohrerachse) gedreht. Der Bohrer **1** kann dazu in eine Handwerkzeugmaschine eingesetzt werden, welche einen entsprechenden Drehantrieb aufweist. Ein Schlagwerk der Handwerkzeugmaschine schlägt periodisch auf das freie Ende **7** des Einsteckendes **4.** Die Stoßwelle der Schläge läuft durch die Wendel **3** in Schlagrichtung **8** zu dem Bohrkopf **2.** Der Bohrkopf **2** zertrümmert den Werkstoff. Die Drehbewegung stellt erstens sicher, dass der Bohrkopf **2** unter verschiedenen Orientierungen auf den Untergrund aufschlägt und das Bohrloch gleichmäßig ausgeschlagen wird, und bewirkt zweitens den Abtransport des Bohrguts aus dem Bohrloch mittels der (Transport-) Wendel **3.**

Der beispielhafte Bohrkopf **2** hat vier Meißelkanten **9.** Die Meißelkanten **9** laufen an einer Spitze **10** auf der Bohrerachse **6** zusammen. Die Spitze **10** ist vorzugsweise der in Schlagrichtung **8** höchste Punkt, welche somit beim Bohren zuerst den Werkstoff kontaktiert. Die Meißelkanten **9** können in radialer Richtung von außen zur Bohrerachse **6** hin längs der Schlagrichtung **8** ansteigen. Die Meißelkanten **9** weisen alle in die Schlagrichtung **8.** Die Meißelkante **9** wird durch jeweils eine im Drehsinn vorauslaufende Facette und eine nachlaufende Facette gebildet, die beide in die Schlagrichtung **8** weisen. Die beiden Facetten sind zueinander geneigt, der Dachwinkel an der Meißelkante **9** ist größer als 45 Grad, vorzugsweise größer 60 Grad und geringer als 120 Grad. Die Meißelkanten **9** können alle gleich ausgestaltet sein, oder paarweise verschieden sein. Der Bohrkopf **2** hat vier Abbruchkanten **11,** die parallel zu der Bohrerachse **6** verlaufen. Die Abbruchkanten **11** gehen in die Meißelkanten **9** über. Die Abbruchkanten **11** definieren den Durchmesser des Bohrkopfs **2**. Die Anzahl der Meißelkanten **9** und der Abbruchkanten **11** kann in Abhängigkeit des Durchmessers des Bohrers **1** gewählt sein. Beispielsweise kann bei einem Bohrer **1** geringen Durchmessers der Bohrkopf **2** zwei Meißelkanten **9,** ein Bohrkopf **2** großen Durchmessers mehr als vier Meißelkanten **9** und entsprechende Zahl von Abbruchkanten **11** aufweisen.

Der Bohrkopf **2** ist vorzugsweise aus einem gesinterten Werkstoff, insbesondere Wolframkarbid, hergestellt. Die Meißelkanten **9** und die Abbruchkanten **11** sind vorzugsweise monolithisch zusammenhängend, insbesondere ohne Fügezone miteinander verbunden.

Die Wendel **3** des Bohrers **1** hat beispielsweise vier Wendelstege **12.** Die Anzahl der Wendelstege **12** ist vorzugsweise gleich der Anzahl der Meißelkanten **9.** Die Wendelstege **12** laufen längs der Bohrerachse **6** mehrfach um diese Bohrerachse **6** um. Die Wendelstege **12** beschreiben beim Drehen des Bohrers **1** eine zylindrische Einhüllende **13,** deren Durchmesser einem Wendeldurchmesser **14** entspricht. Jeweils benachbarte Wendelstege **12** schließen zwischen sich eine Wendelnut **15** ein, die in radialer Richtung durch die Einhüllende als geometrisch begrenzt angesehen wird. Das Bohrgut wird in den Wendelnuten **15** durch die Wendelstegen **12** längs der Bohrerachse **6** transportiert. Eine Wendelsteigung **16** liegt vorzugsweise im Bereich zwischen 35 Grad und 60 Grad, z.B. 45 Grad.

Fig. 2 zeigt einen Querschnitt durch die beispielhafte mehrgängige, vorzugsweise dreigängige oder viergängige Wendel **3.** Die Wendel **3** hat einen massiven zylindrischen Kern **17** von dem die Wendelstege **12** in radialer Richtung abstehen. die Wendelstege **12** sind vorzugsweise in gleichen Abständen um die Bohrerachse **6** verteilt angeordnet, z.B. um 90 Grad zueinander versetzt. Die Wendelstege **12** können identisch ausgebildet sein.

Eine radiale Abmessung **18** (Höhe) der Wendelstege **12** liegt zwischen 1/6 und 5/16 des Wendeldurchmessers **14;** ein (Kern-) Durchmesser **19** des Kerns **17** liegt im Bereich zwischen 3/8 und 2/3 des Wendeldurchmessers **14.** Die Wendelstege **12** benötigen einerseits eine ausreichende mechanische Stabilität, andererseits soll das Bohrgut in den Wendelnuten **15** frei beweglich sein.

Die Wendelstege **12** sind typischerweise deutlich schmaler wie die Wendelnuten **15,** d.h. der Abstand zwischen zwei benachbarten Wendelstegen **12.** Der Wendelsteg hat auf halber Höhe etwa eine Abmessung **20** in Umfangsrichtung (mittlere Breite) von 25 Grad bis 40 Grad. Die mittlere Breite **21** der Wendelnuten **15** auf halber Höhe ist die Differenz der Breite **20** zu dem Quotienten des Vollkreises (360 Grad) und der Anzahl der Wendelstege **12,** z.B. 50 Grad bis 65 Grad bei vier Wendelstegen **12.** Die halbe Höhe auf einem Kreis **22** um die Bohrerachse **6** gemessen, dessen Durchmesser gleich dem Mittelwert von Wendeldurchmesser **14** und Kerndurchmesser **19** ist. Das Volumen oder die hohle Querschnittsfläche der Wendelnuten **15** kann zwischen 3/2 und 8/3 des Volumens bzw. der Querschnittsfläche der Wendelstege **12** liegen. Das Volumen der Wendelnut **15** ist der zwischen der Einhüllenden der Wendel **3** und der Wendel **3** eingeschlossene Hohlraum. Das Volumen der Wendelnuten **15** ist das Volumen der Wendel **3** ohne den zylindrischen Kern **17.**

Das beispielhafte Einsteckende **4** des Bohrers **1** ist für die Verwendung von drehmeißelnden Handwerkzeugmaschinen ausgelegt. Das Einsteckende **4** hat eine im Wesentlichen zylindrische Form. Das Einsteckende **4** hat zwei geschlossene Nuten **23,** in welchen Verriegelungselemente der Handwerkzeugmaschine radial eingreifen und längs der Bohrerachse **6** gleiten können. Zur Bohrerachse **6** längs ausgerichtete Rillen **24** ermöglichen ein Einleiten eines Drehmoments von der Handwerkzeugmaschine.

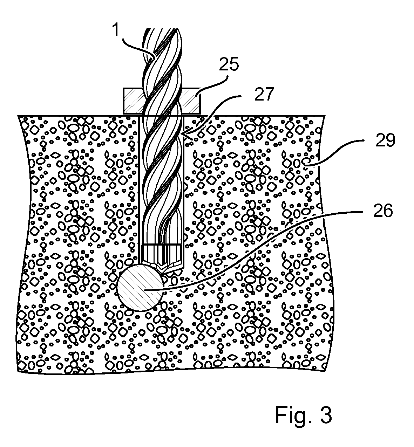

Der Bohrer **1** ist mit einem Wendelverschluss **25** versehen, welcher im Bedarf den Abtransport des Bohrguts durch die Wendel **3** unterbindet. Beispielsweise wenn der Bohrer **1** auf ein Armierungseisen **26** trifft (Darstellung von Fig. 3), erweist sich eine Umgebung mit mineralischem Bohrgut für das Bohren mit dem Bohrkopf **2** als vorteilhaft. Der Anwender kann den Wendelverschluss **25** beim Bohren des Armierungseisens **26** an der Öffnung des Bohrlochs **27** positionieren. Der beispielhafte Wendelverschluss **25** hat ein Innengewinde **28,** worüber durch Drehen um die Bohrerachse **6** der Wendelverschluss **25** auf der Wendel **3** gleich einer Mutter auf einer Gewindestange verschoben werden kann. Beim Bohren von mineralischem Material **29** wird der Wendelverschluss **25** von dem Bohrer **1** abgenommen oder auf der Wendel **3** zu dem Einsteckende **4** hin verschoben.

Der beispielhafte Wendelverschluss **25** ist ein Ring **30** mit dem mehrgängigen, rechtsgängigem Innengewinde **28,** hier beispielhaft einem viergängigen Innengewinde **28.** Das Innengewinde **28** ist formschlüssig zu der Wendel **3** ausgebildet. Das Innengewinde **28** hat mehrere Gewindestege **31,** vorzugsweise drei oder vier Gewindestege **31.** Die Gewindestege **31** greifen in die Wendelnuten **15** ein bzw. die Wendelstege **12** greifen in Gewindegänge des Innengewindes **28** ein. Ein Kerndurchmesser **32** des Innengewindes **28** ist vorzugsweise gleich dem Kerndurchmesser **19** der Wendel **3,** ein Nenndurchmesser **33** des Innengewindes **28** ist vorzugsweise gleich dem Wendeldurchmesser **14.** Für die Bohrer **1** mit unterschiedlichen Wendeldurchmessern sind entsprechend Wendelverschlüsse mit verschieden bemessenen Innengewinden notwendig. Der Wendelverschluss **25** hat einen Nenndurchmesser **33** im Bereich zwischen 10 mm und 25 mm. Die Gewindestege **31** füllen die Wendelnuten **15** vorzugsweise vollständig oder zumindest zu 50 % aus.

Die Gewindestege **31** haben eine mittlere Breite **34,** welche vorzugsweise größer als der Abstand **35** zwischen den Gewindestegen **31,** d.h. die Breite der Gewindegänge ist. Die mittlere Breite **34** liegt vorzugsweise im Bereich von 50 Grad bis 65 Grad, gemessen auf halber Höhe. Das Verhältnis der mittlere Breite **34** zu dem Abstand **35** ist vorzugsweise umgekehrt gleich zu dem obig beschriebenen Verhältnis der mittleren Breite **20** der Wendelstege **12** und der mittleren Breite **21** der Wendelnuten **15.** Die Gewindestege **31** haben somit einen deutlich größeren Flächenanteil oder Volumenanteil an dem hohlzylindrischen Bereich definiert durch den Kerndurchmesser **19** und den Nenndurchmesser **33.** Beispielsweise hat der Querschnitt oder das Volumen der Gewindestege **31** einen Anteil zwischen 11/8 und 3/5 an dem Bereich, d.h. das Volumen der Gewindestege **31** hat zwischen 3/2 und 8/3 des Querschnitts bzw. Volumens der Gewindegänge.

Eine Höhe **36** der Gewindestege **31** zwischen 1/6 und 5/16 des Nenndurchmessers **33;** der Kerndurchmesser liegt im Bereich zwischen 3/8 und 2/3 des Nenndurchmessers **33.** Die Abmessungen sind an die Wendel **3** angepasst.

Die Gewindestege **31** haben eine Gewindesteigung gleich den Wendelstegen **12,** d.h. im Bereich zwischen 35 Grad und 60 Grad. Die Gewindestege **31** laufen vorzugsweise um weniger als 90 Grad um die Bohrerachse **6** um. Die Gewindestege **31** haben vorzugsweise eine wendelförmige Gestalt. Bei einer vereinfachten Gestalt können die Gewindestege **31** als kegelförmige oder kegelstumpf-förmige Noppen ausgebildet sein, welche den Wendelgang vollständig oder zu wenigstens 50 % verschließen.

Die Gewindestege **31** sind vorzugsweise aus einem Elastomer gebildet. Es kann auch der gesamte Wendelverschluss **25** aus einem Elastomer gebildet sein.

Der Wendelverschluss **25** kann wie dargestellt ein geschlossener Ring **30** sein, welcher längs auf den Bohrer **1** aufgeschoben wird. Alternativ kann der Wendelverschluss **25** ein längsgeschlitzter Ring mit Innengewinde sein. Der Wendelverschluss kann seitlich aufgeklipst werden.

## Patentansprüche

1. Bohrer (1) mit einem Bohrkopf (2), einer Wendel (3) mit einer Anzahl von Wendelnuten (15), einem Einsteckende (4) **gekennzeichnet durch** einen ringförmigen Wendelverschluss (25), welcher ein in die Wendelnuten (15) eingreifendes, mehrgängiges Innengewinde (28) aufweist.

2. Bohrer (1) nach Anspruch 1, **dadurch gekennzeichnet, dass** das Innengewinde (28) drei oder mehr Gewindestege (31) aufweist, welche formschlüssig an den Wendelnuten (15) anliegen.

3. Bohrer (1) nach Anspruch 1 oder 2, **dadurch gekennzeichnet, dass** eine mittlere Breite (34) der Gewindestege (31) größer als ein mittlerer Abstand (35) der Gewindestege (31) ist.

4. Bohrer (1) nach Anspruch 3, **dadurch gekennzeichnet, dass** in einem Querschnitt durch die Gewindestege (31), die Gewindestege (31) einen Anteil zwischen 11/8 und 3/5 an dem Lochkreis definiert durch den Kerndurchmesser (32) und den Nenndurchmesser (33) des Innengewindes (28) aufweist.

5. Bohrer (1) nach einem der vorhergehenden Ansprüche, dass eine radiale Abmessung (36) der Gewindestege (31) zwischen 1/6 und 5/16 des Nenndurchmessers (33) des Innengewindes (28) liegt.

6. Wendelverschluss (25) nach einem der vorhergehenden Ansprüche, **dadurch gekennzeichnet, dass** die Gewindestege (31) aus einem Elastomer gebildet sind.

7. Wendelverschluss (25) für einen Bohrer (1) mit einem Innengewinde (28), das drei oder mehr Gewindestege (31) aufweist und eine mittlere Breite (34) der Gewindestege (31) größer als ein mittlerer Abstand (35) der Gewindestege (31) ist.

8. Wendelverschluss (25) nach Anspruch 7, **dadurch gekennzeichnet, dass** ein Nenndurchmesser (33) des Innengewindes (28) zwischen 10 mm und 25 mm liegt.

9. Wendelverschluss (25) nach Anspruch 7 oder 8, **dadurch gekennzeichnet**, eine radiale Abmessung (36) der Gewindestege (31) zwischen 1/6 und 5/16 des Nenndurchmessers (33) des Innengewindes (28) liegt.

10. Wendelverschluss (25) nach einem der Ansprüche 7 bis 9, **dadurch gekennzeichnet, dass** die Gewindestege (31) aus einem Elastomer gebildet sind.
